# EUROPÄISCHE PATENTSCHRIFT

(11) **EP 4 112 375 B1**
(45) Veröffentlichungstag und Bekanntmachung des Hinweises auf die Patenterteilung: **30.08.2023**
(21) Anmeldenummer: 21183118.5
(22) Anmeldetag: 01.07.2021
(51) Int. Cl.: B60P 1/02, B60P 3/07, B60P 3/36

(54) **KRAFTFAHRZEUG, INSBESONDERE REISEMOBIL**
MOTOR VEHICLE, IN PARTICULAR MOBILE HOME
VÉHICULE AUTOMOBILE, EN PARTICULIER CARAVANE AUTOMOBILE

(43) Veröffentlichungstag der Anmeldung: 04.01.2023
(73) Patentinhaber: Volkner, Gerhard, 42327 Wuppertal (DE)
(72) Erfinder: VOLKNER, Gerhard, 42327 Wuppertal (DE)
(74) Vertreter: Andrejewski - Honke Patent- und Rechtsanwälte Partnerschaft mbB

(56) Entgegenhaltungen:
- DE-A1- 3 619 124
- DE-B4-102005 036 590
- JP-A- S60 128 035
- US-A- 4 822 222
- US-A1- 2008 247 853

## Beschreibung

Die Erfindung betrifft ein Kraftfahrzeug, insbesondere Reisemobil, mit einem eine Karosserie tragenden Fahrwerk mit zumindest zwei Achsen, und mit einer in der Karosserie angeordneten Transportaufnahme mit Aufnahmeboden, wobei der Aufnahmeboden gegenüber der Karosserie zum Zwecke des Be- und Entladens mit einem Objekt, beispielsweise einem Pkw, ein- und ausfahrbar ausgebildet ist, und wobei der mit dem Objekt beladene Aufnahmeboden nach dem Einfahren mithilfe einer Hebevorrichtung innerhalb der Transportaufnahme angehoben wird bzw. angehoben werden.

Kraftfahrzeuge und insbesondere Reisemobile werden mit der vorerwähnten Transportaufnahme mit Aufnahmeboden typischerweise ausgerüstet, um Objekte wie beispielsweise Pkw oder auch Zweiräder in der Transportaufnahme zu bevorraten, während der Fahrt mitzuführen und im Bedarfsfall zu nutzen. Dazu wird das betreffende Objekt auf den gegenüber der Karosserie ausgefahrenen Aufnahmeboden verbracht und anschließend der Aufnahmeboden in die Transportaufnahme eingefahren. Zum Abschluss wird die Transportaufnahme typischerweise mit einer motorisch betätigten Klappe verschlossen.

Bei einem Kraftfahrzeug und insbesondere Reisemobil nach dem gattungsbildenden Stand der Technik, wie es in der DE 10 2005 036 590 B4 oder auch der DE 10 2007 035 143 A1 beschrieben wird, ist die fragliche Transportaufnahme in Längsrichtung des Kraftfahrzeuges bzw. Reisemobils zwischen den Achsen angeordnet. Das Be- und Entladen erfolgt also zur Längsseite des Wohnmobils hin. Dazu wird der Aufnahmeboden quer zur Längsrichtung bzw. Längsachse des Reisemobils verfahren. Für den Verschluss der Transportaufnahme sorgt eine verfahrbare Seitenklappe. Neben der zuvor im gattungsbildenden Stand der Technik angesprochenen Seitengarage kennt man bei Kraftfahrzeugen und insbesondere Wohnmobilen aber auch sogenannte Heckgaragen, wie sie in der ebenfalls gattungsbildenden DE 199 28 646 A1 im Detail beschrieben werden. In diesem Fall sorgt eine Heckklappe für den Verschluss der Transportaufnahme im Heckbereich. Mithilfe der Hebevorrichtung wird bei der bekannten Lehre der Aufnahmeboden um eine Achse verschwenkt.

Darüber hinaus werden im Stand der Technik nach der US 2011/0000730 A1 Kraftfahrzeuge und insbesondere Reisemobile beschrieben, die sowohl mit einer Heckgarage als auch einer Seitengarage alternativ oder kumulativ ausgerüstet sind bzw. ausgerüstet werden können. Das hat sich grundsätzlich bewährt.

Darüber hinaus beschäftigt sich die DE 36 19 124 A1 mit einer Ladepritsche für Fahrzeuge. Dabei wird unter anderem eine Aufhängung eines Tragbalkens mit daran befestigter Ladebordwand beschrieben, welche entgegen der Absenkrichtung ein Spiel wenigstens in der Größenordnung von auszugleichenden Bodenunebenheiten zulässt. Das Spiel ist folglich begrenzt.

Die zuvor beschriebenen Kraftfahrzeuge und insbesondere Reisemobile mit Seitengarage sind mit dem Vorteil ausgerüstet, dass in diesem Fall im Heckbereich der Antrieb untergebracht werden kann, folglich der Betrieb besonders geräusch- und vibrationsarm erfolgt. Generell wird an dieser Stelle so vorgegangen, dass sich die Hebevorrichtung einerseits an einem die Karosserie tragenden Rahmen und andererseits an dem Aufnahmeboden abstützt. Das hat zur Folge, dass mithilfe der Hebevorrichtung der Aufnahmeboden soweit abgesenkt werden kann, dass ein auf dem Aufnahmeboden abgestellter Pkw unter den fraglichen Rahmen bewegt werden kann. Mithilfe der Hebevorrichtung lässt sich darüber hinaus das gesamte Fahrzeug anheben, so dass unter Umständen sogar das Fahrwerk den Kontakt zu einem Untergrund verliert.

Die beschriebene Vorgehensweise hat sich zwar grundsätzlich bewährt, bietet allerdings Raum für Verbesserungen. Denn dadurch, dass sich die Hebevorrichtung an dem Rahmen und dem Aufnahmeboden abstützt, wird ein möglichst ebener Untergrund benötigt, um den Aufnahmeboden hierauf abstellen zu können und den auf dem Aufnahmeboden aufgenommenen Pkw unter dem Rahmen hindurch bewegen zu können. Ein solcher Untergrund steht jedoch oftmals nicht oder nur eingeschränkt zur Verfügung. Außerdem können etwaige Unebenheiten zu Verkantungen des Aufnahmebodens führen. Hier will die Erfindung insgesamt Abhilfe schaffen.

Der Erfindung liegt das technische Problem zugrunde, ein gattungsgemäßes Kraftfahrzeug und insbesondere Reisemobil so weiterzuentwickeln, dass die Funktion des Aufnahmebodens weitgehend unabhängig von der Beschaffenheit des Untergrundes ist und etwaige Verkantungen vermieden werden.

Zur Lösung dieser technischen Problemstellung ist ein gattungsgemäßes Kraftfahrzeug und insbesondere Reisemobil im Rahmen der Erfindung dadurch gekennzeichnet, dass die Hebevorrichtung den Aufnahmeboden durchgreift, wobei die Hebevorrichtung lösbar mit dem Aufnahmeboden verriegelt und hierdurch der Aufnahmeboden gegenüber der Hebevorrichtung schwimmend gelagert ist, sodass eine Relativbewegung zwischen dem Aufnahmeboden und der Hebevorrichtung zugelassen wird.

Das heißt, erfindungsgemäß stützt sich die Hebevorrichtung zwar in der Regel und nach wie vor an dem fraglichen Rahmen ab. Allerdings fungiert als weitere Unterstützung bzw. Abstützung für die Hebevorrichtung nicht der Aufnahmeboden wie bei dem zuvor geschilderten Stand der Technik, sondern der Untergrund. Das heißt, die Hebevorrichtung stützt sich vorteilhaft einerseits an dem besagten Untergrund und andererseits an dem Rahmen ab. Außerdem wird erfindungsgemäß so vorgegangen, dass die Hebevorrichtung lösbar mit dem Aufnahmeboden verriegelt ist. Auf diese Weise ist der Aufnahmeboden gegenüber der Hebevorrichtung schwimmend gelagert und wird im Rahmen der Erfindung ausdrücklich eine Relativbewegung zwischen dem Aufnahmeboden und der Hebevorrichtung zugelassen.

Der bereits angesprochene Rahmen stützt sich im Allgemeinen auf dem Fahrwerk ab. Außerdem trägt der Rahmen in der Regel die Karosserie und eine im Inneren der Karosserie definierte Fahrzeugzelle. Die Karosserie und folglich auch die im Inneren definierte Fahrzeugzelle können dabei selbsttragend ausgebildet sein.

Es hat sich bewährt, wenn als Hebevorrichtung eine Kolben-/Zylinderanordnung mit Hubzylinder und demgegenüber verfahrbarer Kolbenstange zum Einsatz kommt. Eine solche Hebevorrichtung lässt sich problemlos hydraulisch betätigen. Dabei wird meistens so vorgegangen, dass die Zylinderanordnung bzw. der Hubzylinder karosseriefest und die zugehörige Kolbenstange demgegenüber ausfahrbar ausgebildet ist. Die Zylinderanordnung mag beispielsweise an den Rahmen angeschlossen sein. In der Regel ist die jeweilige Hebevorrichtung bzw. Kolben-/Zylinderanordnung in einzelnen Vertikalträgern eines Aufnahmekäfigs angeordnet. Das wird mit Bezug zum Ausführungsbeispiel noch näher erläutert.

Da erfindungsgemäß die Hebevorrichtung den Aufnahmeboden durchgreift, ist die Auslegung im Detail so getroffen, dass die Kolbenstange als Bestandteil der jeweiligen Kolben-/Zylinderanordnung unter Zwischenschaltung eines Lagers den Aufnahmeboden durchgreift. Dabei kann die Kolbenstange mithilfe einer Verriegelungseinheit lösbar mit dem Aufnahmeboden verriegelt werden. Die Verriegelungseinheit ist zu diesem Zweck in der Regel in oder an dem fraglichen Lager für die Kolbenstange angeordnet. Bei der Verriegelungseinheit handelt es sich typischerweise um zumindest einen die Kolbenstange durchgreifenden und beispielsweise hydraulisch betätigbaren Bolzen. Zu diesem Zweck ist die Kolbenstange im Allgemeinen in ihrer Längserstreckung mit zumindest einer bzw. ggf. mehreren Durchgriffsöffnungen für den betreffenden Bolzen ausgerüstet.

Darüber hinaus und nach besonders bevorzugter Ausführungsform verfügt die Hebevorrichtung über wenigstens einen Sensor. Bei dem Sensor handelt es sich im Allgemeinen um einen Abstandssensor, um einen Abstand des Aufnahmebodens von der Hebevorrichtung und damit auch den Abstand einer Dachfläche der Transportaufnahme zum Aufnahmeboden zu erfassen.

Darüber hinaus ist meistens noch ein weiterer Sensor in der Transportaufnahme vorgesehen, mit dessen Hilfe Abmessungen des Objektes erfasst werden können. Der fragliche weitere Sensor ist dabei im Allgemeinen an der Dachfläche der Transportaufnahme angeordnet und arbeitet typischerweise berührungslos. Darüber hinaus hat es sich bewährt, wenn eine die beiden Sensoren auswertende Steuereinheit realisiert ist. Die Steuereinheit steuert dabei in Abhängigkeit von mit den Sensoren ermittelten Werten die Hebevorrichtung entsprechend an.

Dabei wird meistens so vorgegangen, dass der Aufnahmeboden zum Absenken mit der Hebevorrichtung in der Regel nicht verriegelt ist. Wenn also die Hebevorrichtung abgesenkt wird, können die einzelnen Kolbenstangen mit zugehörigen Füßen auf dem Untergrund abgestellt werden. Der Aufnahmeboden folgt hierbei der Senkbewegung der Hebevorrichtung, gleitet praktisch durch sein Eigengewicht und die realisierte schwimmende Lagerung an den Kolbenstangen vertikal nach unten in Richtung auf den Untergrund und legt sich hierbei auf dem Untergrund ab. Hierbei kommt es einerseits nicht zu Verkantungen und es werden andererseits etwaige Unebenheiten des Untergrundes durch den darauf abgelegten Aufnahmeboden ausgeglichen.

In dieser auf dem Untergrund abgelegten Position des Aufnahmebodens bzw. von den Aufnahmeboden tragenden Horizontalträgern kann nun ein Objekt auf dem Aufnahmeboden zum Zwecke des Beladens abgestellt oder abgelegt werden. Sofern der Aufnahmeboden zu einer Seitengarage nach dem gattungsbildenden Stand der Technik entsprechend der DE 10 2005 036 590 B4 oder gemäß der DE 10 2007 035 143 A1 gehört, wird hierzu der Aufnahmeboden quer zur Längsachse des Kraftfahrzeuges bzw. Reisemobils und typischerweise den Horizontalträgern verfahren.

Nach dem Beladen des Aufnahmebodens und dem Einfahren des Aufnahmebodens in die Transportaufnahme wird die Hebevorrichtung aktiviert. Dazu werden die zuvor ausgefahrenen Kolbenstangen gegenüber ihren zugehörigen Hubzylindern hydraulisch zurückgezogen und nehmen hierbei über entsprechende Anschläge den Aufnahmeboden mit, welcher auf diese Weise innerhalb der Transportaufnahme vertikal in Richtung auf die Dachfläche der Transportaufnahme verfahren wird.

Damit bei diesem Vorgang etwaige Kollisionen des Objektes mit der fraglichen Dachfläche der Transportaufnahme vermieden werden, sind der eine bzw. die beiden Sensoren vorgesehen und wird in Abhängigkeit ihres bzw. ihrer Signale mithilfe der Steuereinheit die Hebevorrichtung angesteuert.

Dabei sorgt der an der Dachfläche der Transportaufnahme vorgesehene Sensor dafür, dass die Kontur des auf dem Aufnahmeboden aufgenommenen Objektes berührungslos erfasst und zugehörige Oberflächenpunkte des betreffenden Objektes hinsichtlich ihres Abstandes zur Dachfläche der Transportaufnahme gemessen werden. In Verbindung mit dem Abstandssensor, welcher jeweils den Abstand des Aufnahmebodens von der Hebevorrichtung und damit der Dachfläche der Transportaufnahme misst, kann die Steuereinheit entsprechend dafür sorgen, dass die Hebevorrichtung den Aufnahmeboden derart ansteuert, dass die einzelnen Oberflächenpunkte des Objektes gegebenenfalls unter Berücksichtigung eines Sicherheitsabstandes nicht mit der Dachfläche der Transportaufnahme kollidieren.

Zu diesem Zweck handelt es sich bei dem das Objekt vermessenden und an der Dachfläche der Transportaufnahme vorgesehenen Sensors typischerweise um einen 3D-Laserscanner, der nach dem sogenannten Impulsmessverfahren über Laufzeitmessungen den Abstand der einzelnen Oberflächenpunkte zur Dachfläche der Transportaufnahme erfasst und auswertet. Der weitere Abstandssensor zur Messung des Abstandes des Aufnahmebodens von der Hebevorrichtung und damit der Dachfläche der Transportaufnahme zum Aufnahmeboden ist vorteilhaft als Näherungsschalter bzw. induktiv arbeitender Sensor ausgebildet. Auch in diesem Fall erfolgt eine verschleißfreie und berührungslose Messung. Außerdem sind solche Sensoren besonders verschmutzungsunempfindlich.

Tatsächlich ist der fragliche Näherungsschalter bzw. induktive Sensor am Fuß des Hubzylinders der Kolben-/Zylinderanordnung platziert. Dadurch kann der fragliche Sensor eine Annäherung des von der Kolbenstange durchgriffenen Lagers am Aufnahmeboden unschwer ermitteln, weil dieses vorteilhaft mit einem metallischen Befestigungskranz ausgerüstet ist. Über den metallischen Befestigungskranz des Lagers wird der Aufnahmeboden gegebenenfalls unter Zwischenschaltung eines Auslegers oder Zwischenstücks mit dem betreffenden Lager verbunden. Jedenfalls lässt sich die Annäherung des metallischen Befestigungskranzes des Lagers und damit des Aufnahmebodens mithilfe des fußseitig an den Hubzylinder angeschlossenen Näherungsschalters vorteilhaft erfassen. Denn mit der Annäherung des metallischen Befestigungskranzes geht eine Änderung der Induktivität einer bei dem fraglichen induktiven Sensor vorgesehenen Spule einher.

Im Ergebnis wird ein Kraftfahrzeug und insbesondere Reisemobil zur Verfügung gestellt, welches eine besonders schonende Be- und Entladung des gegenüber der Transportaufnahme verfahrbaren Aufnahmebodens zur Verfügung stellt. Darüber hinaus und als weiterer Vorteil sorgt die schwimmende Lagerung des Aufnahmebodens an der Hebevorrichtung erfindungsgemäß dafür, dass die Hebevorrichtung für den Aufnahmeboden eine Doppelfunktion übernehmen kann. Tatsächlich lässt sich die Hebevorrichtung zunächst einmal dazu nutzen und einsetzen, um das auf dem Aufnahmeboden abgelegte Objekt vertikal innerhalb der Transportaufnahme verfahren zu können, um anschließend die Transportaufnahme beispielsweise mit der Seitenklappe motorisch zu verschließen.

Hinzu kommt als weiterer Vorteil, dass die Hebevorrichtung ganz generell auch genutzt werden kann, um das fragliche Kraftfahrzeug und insbesondere Reisemobil gegenüber dem Untergrund ausrichten zu können. Das heißt, die Hebevorrichtung ersetzt erfindungsgemäß an dieser Stelle oftmals zusätzlich vorgesehene Hydraulikstempel, mit denen solche Kraftfahrzeuge und insbesondere Reisemobile am Aufstellort in die Horizontale gebracht werden, wenn der Untergrund beispielsweise abschüssig ist oder sein sollte. Anders ausgedrückt, können solche Hydraulikstempel erfindungsgemäß entfallen, weil ihre Funktion von der Hebevorrichtung übernommen wird, die demzufolge die beschriebene doppelte Funktionalität einerseits zum Ausrichten des Kraftfahrzeuges und andererseits für die Hubbewegung des Aufnahmebodens ausfüllt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: Das erfindungsgemäße Kraftfahrzeug respektive Reisemobil in einer grundsätzlichen Seitenansicht,
- Fig. 2: einen perspektivischen Ausschnitt aus dem Gegenstand nach Fig. 1 im Bereich der Transportaufnahme und
- Fig. 3 und 4: die Hebevorrichtung inklusive Aufnahmeboden im teilweisen Schnitt im Detail.

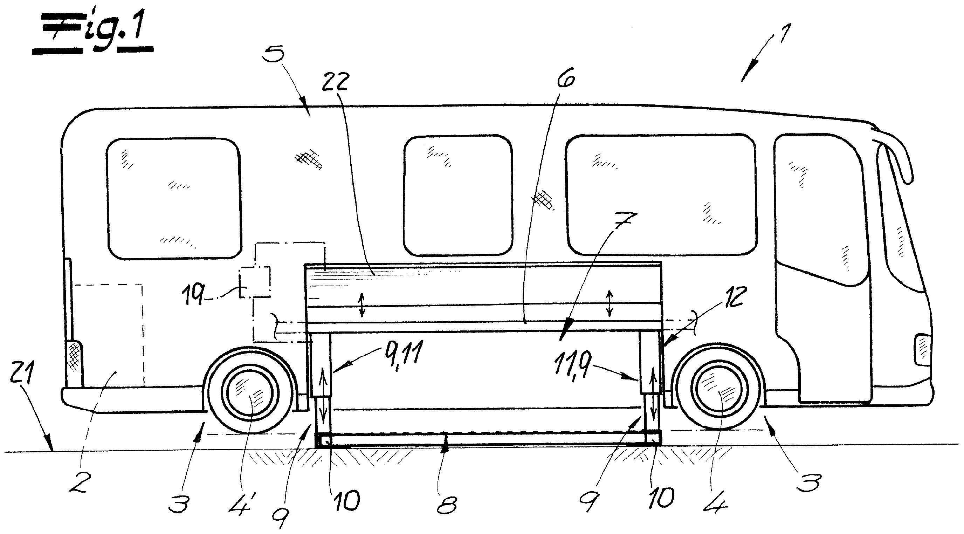

In den Figuren ist ein Kraftfahrzeug in Gestalt eines Reisemobils 1 dargestellt. Das Reisemobil 1 verfügt zu diesem Zweck über ein eine Karosserie tragendes Fahrwerk 3 mit zumindest zwei Achsen 4, 4'. Von besonderer Bedeutung ist noch ein in der Fig. 1 dargestellter Heckantrieb 2, welcher für einen besonders komfortablen und geräuscharmen Betrieb sorgt. Außerdem erkennt man eine Fahrzeugzelle 5 mit einem auf dem Fahrwerk 3 abgestützten Rahmen 6 und eine Transportaufnahme 7.

Der Rahmen 6 setzt sich aus zwei Längsprofilen zusammen, die durch Querstreben zu einem Gitter miteinander verbunden sind. Die Längsstreben bzw. Längsprofile des Rahmens 6 erstrecken sich dabei über die gesamte Länge des Reisemobils 1. Bei der Transportaufnahme 7 handelt es sich im Ausführungsbeispiel um eine sogenannte Seitengarage, die in der Karosserie angeordnet ist und zu diesem Zweck über einen Aufnahmeboden 8 verfügt, der auf Horizontalträgern 10 angeordnet ist bzw. sich gegenüber diesen Horizontalträgern 10 verschieben lässt, und zwar nach dem Ausführungsbeispiel quer zur Längserstreckung des Reisemobils 1.

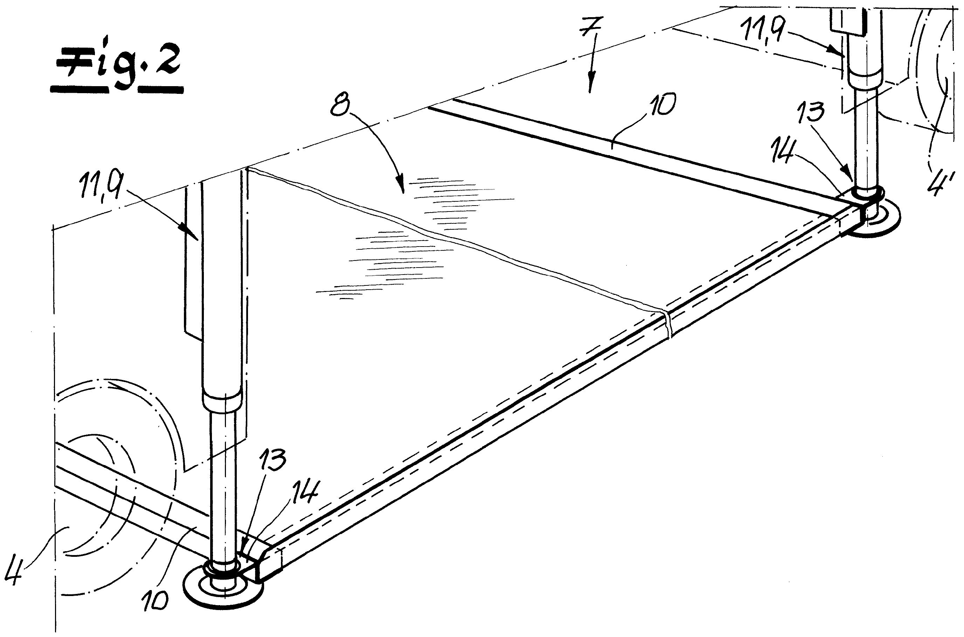

Die Horizontalträger 10 beschreiben in Verbindung mit insbesondere in der Fig. 2 erkennbaren Vertikalträgern 11 insgesamt einen Aufnahmekäfig 12, der innerhalb der Transportaufnahme 7 angeordnet ist und für die Führung und Lagerung des Aufnahmebodens 8 sorgt. Der Aufnahmekäfig 12 ist an den Rahmen 6 angeschlossen und stützt sich hieran ab. Bei einer vergleichenden Betrachtung der Figuren 1 und 2 wird deutlich, dass die Vertikalträger 11 in ihrem Inneren jeweils eine Hebevorrichtung 9 aufweisen, bei der es sich nach dem Ausführungsbeispiel um eine Kolben-/Zylinderanordnung 9a, 9b mit Hubzylinder 9a und demgegenüber verfahrbarer Kolbenstange 9b handelt. Im Ausführungsbeispiel und nicht einschränkend fallen die Hebevorrichtung 9 und die Vertikalträger 11 funktional zusammen.

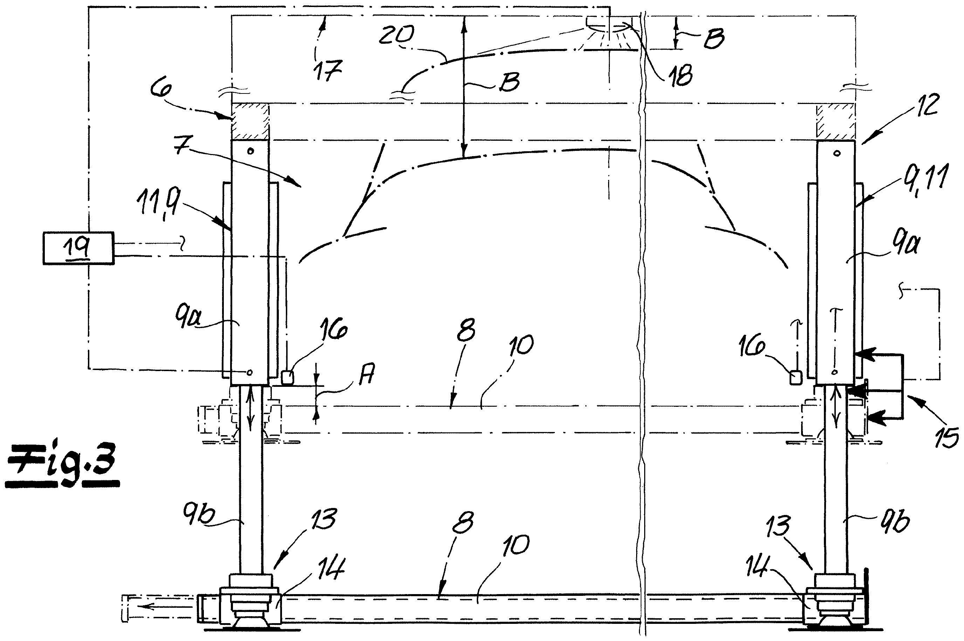

Der mit einem Objekt 20 beladene Aufnahmeboden 8 kann nach dem Einfahren in die Transportaufnahme 7 mithilfe der Hebevorrichtung 9 innerhalb der Transportaufnahme 7 angehoben werden. Erfindungsgemäß ist die Auslegung so getroffen, dass die Hebevorrichtung 9 den Aufnahmeboden 8 durchgreift bzw. seitlich an diesen angeschlossen ist. Dazu ist die Auslegung im Detail so getroffen, wie dies anhand der Schnittdarstellung in der Fig. 3 deutlich wird. Tatsächlich zeigt die Fig. 3 die Transportaufnahme 7 in schematischem Querschnitt. Anhand dieser Darstellung wird deutlich, dass die Hebevorrichtung 9 bzw. die Kolben-/Zylinderanordnung 9a, 9b mit dem Hubzylinder 9a und der demgegenüber verfahrbaren Kolbenstange 9b karosseriefest angebracht ist. Tatsächlich ist der jeweilige Hubzylinder 9a mit den zuvor bereits angesprochenen Längsträgern bzw. dem Rahmen 6 kopfseitig verbunden.

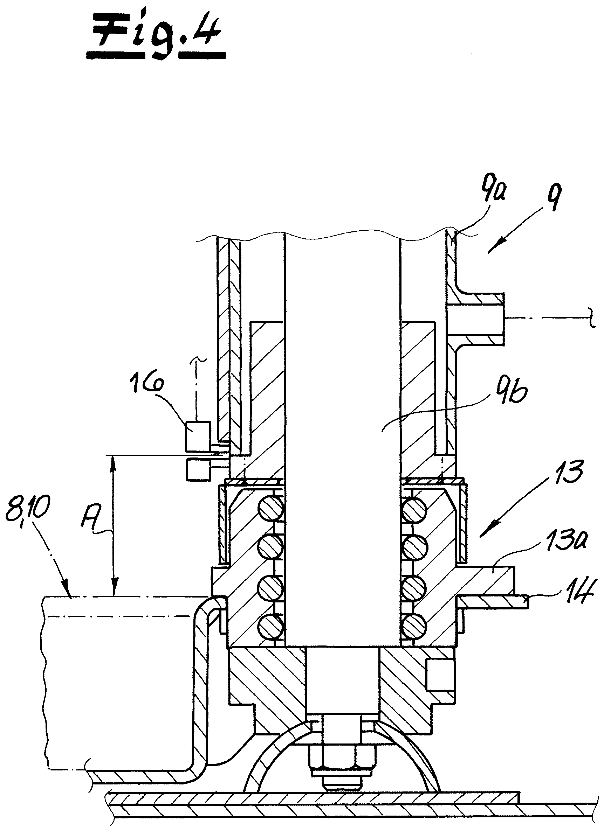

Da der fragliche Aufnahmekäfig 12 mit insgesamt vier Vertikalträgern 11 und zwei bzw. vier Horizontalträgern 10 ausgerüstet ist, finden sich zugehörig auch jeweils vier Hebevorrichtungen 9 in den betreffenden Vertikalträgern 11. Gegenüber dem jeweiligen Hubzylinder 9a lassen sich die zugehörigen Kolbenstangen 9b aus- und einfahren. Dabei ist die betreffende Kolbenstange 9b unter Zwischenschaltung eines insbesondere in der Fig. 4 zu erkennenden Lagers 13 mit dem Aufnahmeboden 8 verbunden. Hierbei durchgreift die betreffende Kolbenstange 9b das Lager 13 und damit den Aufnahmeboden 8. Denn der Aufnahmeboden 8 ist unter Zwischenschaltung eines Auslegers bzw. Zwischenstückes 14 mit dem Lager 13 respektive den verfahrbaren Aufnahmeboden 8 lagernden beidseitigen Horizontalträgern 10 verbunden.

Die Kolbenstange 9b lässt sich mithilfe einer Verriegelungseinheit 15 mit dem Aufnahmeboden 8 verriegeln. Bei der Verriegelungseinheit 15 handelt es sich gemäß dem Ausführungsbeispiel um einen oder mehrere Bolzen, welcher die Kolbenstange 9b durchgreift. Der fragliche Bolzen bzw. die Verriegelungseinheit 15 wird zu diesem Zweck hydraulisch betätigt. Gleiches gilt für die Kolben-/Zylinderanordnung 9a, 9b mit dem Hubzylinder 9a und der demgegenüber verfahrbaren Kolbenstange 9b. Außerdem erkennt man anhand der Fig. 3, dass die dort schematisch wiedergegebene Verriegelungseinheit 15 generell auch den Aufnahmeboden 8 und den Vertikalträger 11 bzw. den hiermit verbundenen Rahmen 6 lösbar miteinander verriegeln kann. Generell ist auch eine gemeinsame Verriegelung möglich.

Das Lager 13 ist mit einem metallischen Befestigungskranz 13a ausgerüstet, welcher mit dem Zwischenstück bzw. Ausleger 14 gekoppelt ist, um die feste Verbindung zum Aufnahmeboden 8 bzw. den den Aufnahmeboden 8 lagernden Horizontalträgern 10 gewährleisten zu können. Außerdem wird der fragliche Befestigungskranz 13a für nachfolgend noch zu beschreibende Abstandsmessungen zu einem Sensor 16 genutzt. Tatsächlich ist die Hebevorrichtung 9 mit dem betreffenden Sensor 16 ausgerüstet. Bei dem fraglichen Sensor 16 handelt es sich um einen Abstandssensor, um einen Abstand A des Aufnahmebodens 8 von der Hebevorrichtung 9 und folglich einer Dachfläche 17 der Transportaufnahme 7 erfassen zu können.

In der Fig. 3 erkennt man, dass neben dem Sensor 16 bzw. Abstandssensor zusätzlich ein weiterer Sensor 18 in der Transportaufnahme 7 vorgesehen ist. Der fragliche Sensor 18 ist dabei nach dem Ausführungsbeispiel an die Dachfläche 17 der Transportaufnahme 7 angeschlossen. Mithilfe des weiteren Sensors 18 lassen sich Abmessungen insbesondere eine Oberfläche des Objektes erfassen. Zu diesem Zweck arbeitet der Sensor 18 berührungslos.

Tatsächlich können mithilfe des Sensors 18 Abstände B von Oberflächenpunkten des Objektes 20 zur Dachfläche 17 der Transportaufnahme 7 ermittelt werden, wie dies in der Fig. 3 angedeutet ist. Beide Sensoren 16, 18 sind an eine in der Fig. 3 angedeutete gemeinsame Steuereinheit 19 angeschlossen. Gleiches gilt auch für die Hebevorrichtung 9 und auch die Verriegelungseinheit 15. Als Folge hiervon kann die die beiden Sensoren 16, 18 auswertende Steuereinheit 19 nicht nur den jeweiligen Abstand A des Aufnahmebodens 8 von dem Sensor 16 und damit auch des Aufnahmebodens 8 von der Dachfläche 17 der Transportaufnahme 7 auswerten, sondern auch den Abstand B der einzelnen Oberflächenpunkte des auf dem Aufnahmeboden 8 befindlichen Objektes 20 zur fraglichen Dachfläche 17. Bei dem Objekt 20 handelt es sich beispielhaft um den zuvor bereits angesprochene Pkw 20. Anhand der Messwerte für die einzelnen Abstände A und B sorgt die Steuereinheit 19 nun für die Beaufschlagung der Hebevorrichtung 9, und zwar derart, dass die Oberflächenpunkte des Objektes 20 gegebenenfalls unter Berücksichtigung eines Sicherheitsabstandes nicht mit der Dachfläche 17 der Transportaufnahme 7 beim Anheben des Aufnahmebodens 8 mithilfe der Hebevorrichtung 9 kollidieren.

Die Kolbenstange 9b ist mit der bereits angesprochenen Verriegelungseinheit 15 lösbar mit dem Aufnahmeboden 8 verriegelt. Dazu kann die Verriegelungseinheit 15 in oder an dem fraglichen Lager 13 angeordnet sein. Auch die Verriegelungseinheit 15 wird mithilfe der Steuereinheit 19 beaufschlagt. Da die betreffende Kolbenstange 9b in ihrer Längserstreckung mit mehreren Durchgriffsöffnungen für den Bolzen bzw. die Verriegelungseinheit 15 ausgerüstet ist, kann der Aufnahmeboden 8 in praktisch beliebiger Relativposition entlang der Kolbenstange 9b verfahren und mit dieser bedarfsweise verriegelt werden. Das stellt allerdings nur eine Option dar.

Im Regelfall wird so vorgegangen, dass nach dem Halt des Reisemobils 1 an einem Abstellort der Aufnahmeboden 8 abgesenkt wird. Hierbei ist die Verriegelungseinheit 15 gegenüber dem Aufnahmeboden 8 gelöst. Als Folge hiervon können die Kolbenstangen 9b gegenüber den Hubzylindern 9a vertikal nach unten ausgefahren werden, bis die Kolbenstangen 9b auf einem Untergrund 21 mit ihren angedeuteten Füßen aufstehen. Der mit dem Objekt 20 beladene Aufnahmeboden 8 bzw. die den Aufnahmeboden 8 lagernden Horizontalträger 10 des Aufnahmekäfigs 12 können aufgrund der schwimmenden Lagerung des Aufnahmebodens 8 an den betreffenden Kolbenstangen 9b und infolge ihres Gewichtes der Vertikalbewegung der Kolbenstangen 9b folgen und werden hierbei schonend auf dem Untergrund 21 und kraftfrei abgelegt.

Jetzt kann der Aufnahmeboden 8 gegenüber den Horizontalträgern 10 seitlich in Querrichtung zur Längserstreckung des Reisemobils 1 ausgefahren werden. Zuvor ist eine lediglich in der Fig. 1 zu erkennende motorisch verfahrbare Seitenklappe 22 geöffnet worden, die ebenfalls mithilfe der Steuereinheit 19 angesteuert bzw. beaufschlagt wird. Nach dem seitlichen Ausfahren des Aufnahmebodens 8 kann das Objekt 20 von dem Aufnahmeboden 8 entladen werden, indem im dargestellten Ausführungsbeispiel der an dieser Stelle vorgesehene Pkw 20 schlicht und ergreifend von dem Aufnahmeboden 8 herunterfährt.

Umgekehrt wird bei einem Beladevorgang vorgegangen. In diesem Fall wird das Objekt 20 bzw. der Pkw von dem Aufnahmeboden 8 aufgenommen bzw. fährt auf diesen herauf. Der Aufnahmeboden 8 wird anschließend seitlich in die Transportaufnahme 7 eingefahren, indem der Aufnahmeboden 8 mithilfe von nicht ausdrücklich dargestellten Kolben-/Zylinderanordnungen geführt durch die Horizontalträger 10 in Querrichtung verfahren wird. Die fraglichen Kolben-/Zylinderanordnungen werden erneut hydraulisch betätigt. Die Verriegelungseinheit 15 ist hierbei nach wie vor gelöst.

Wenn nun der in die Transportaufnahme 7 eingefahrene und mit dem Objekt 20 beladene Aufnahmeboden 8 mithilfe der Hebevorrichtung 9 angehoben wird, stellen die Sensoren 16, 18 sicher, dass bei diesem durch die Steuereinheit 19 initiierten Vorgang das auf dem Aufnahmeboden 8 befindliche Objekt 20 nicht mit der Dachfläche 17 der Transportaufnahme 7 kollidieren kann. Dabei mag auch ein einstellbarer Sicherheitsabstand eingehalten werden. Denn die Steuereinheit 19 wird bei diesem Vorgang ständig über einerseits den Abstand A des Aufnahmebodens 8 zu der betreffenden Dachfläche 17 und andererseits die jeweiligen Abstände B der Oberflächenpunkte des Objektes 20 zu der betreffenden Dachfläche 17 unterrichtet. Erst wenn der Aufnahmeboden 8 seine Endposition mit dem darauf befindlichen Objekt 20 eingenommen hat, sorgt die Verriegelungseinheit 15 dafür, dass der Aufnahmeboden 8 gegenüber der Hebevorrichtung 9 verriegelt wird. Gleiches gilt dann natürlich auch für den gesamten Aufnahmekäfig 12, und zwar gegenüber den Längsträgern bzw. dem Längsträger 6 und damit der Karosserie im Ganzen.

Der beschriebene Vorgang der Beaufschlagung des Aufnahmebodens 8 ebenso wie der Hebevorrichtung 9 kann seitens der Steuereinheit19 vollautomatisch vorgenommen werden. Es ist auch ein teilautomatischer Betrieb möglich. In diesem Fall beaufschlagt ein Bediener mit einer Fernbedieneinheit die Steuereinheit 19 und damit den Aufnahmeboden 8 und die Hebevorrichtung 9. Bevor etwaige Kollisionen des Objektes 20 mit der Dachfläche 17 der Transportaufnahme 7 passieren können, sorgt die Steuereinheit 19 nach Maßgabe von Signalen der Sensoren 16, 18 dafür, dass die jeweilige Hebevorrichtung 9 zuvor abgebremst wird.

## Patentansprüche

1. Kraftfahrzeug, insbesondere Reisemobil (1), mit einem eine Karosserie tragenden Fahrwerk (3) mit zumindest zwei Achsen (4, 4'), und mit einer in der Karosserie angeordneten Transportaufnahme (7) mit Aufnahmeboden (8), wobei der Aufnahmeboden (8) gegenüber der Karosserie zum Zwecke des Be- und Entladens mit einem Objekt (20), beispielsweise einem Pkw (20), ein- und ausfahrbar ausgebildet ist, und wobei der mit dem Objekt (20) beladene Aufnahmeboden (8) nach dem Einfahren mithilfe einer Hebevorrichtung (9) innerhalb der Transportaufnahme (7) angehoben wird,
**dadurch gekennzeichnet, dass**
die Hebevorrichtung (9) den Aufnahmeboden durchgreift, wobei
die Hebevorrichtung (9) lösbar mit dem Aufnahmeboden (8) verriegelt und hierdurch der Aufnahmeboden (8) gegenüber der Hebevorrichtung (9) schwimmend gelagert ist, sodass
eine Relativbewegung zwischen dem Aufnahmeboden (8) und der Hebevorrichtung (9) zugelassen wird.

2. Kraftfahrzeug nach Anspruch 1, **dadurch gekennzeichnet, dass** sich die Hebevorrichtung (9) einerseits am Untergrund (21) und andererseits an einem Rahmen (6) abstützt.

3. Kraftfahrzeug nach Anspruch 2, **dadurch gekennzeichnet, dass** sich der Rahmen (6) auf dem Fahrwerk (3) abstützt und eine Fahrzeugzelle (5) trägt.

4. Kraftfahrzeug nach einem der Ansprüche 1 bis 3, **dadurch gekennzeichnet, dass** die Hebevorrichtung (9) als Kolben-/Zylinderanordnung (9a, 9b) mit Hubzylinder (9a) und demgegenüber verfahrbarer Kolbenstange (9b) ausgebildet ist.

5. Kraftfahrzeug nach Anspruch 4, **dadurch gekennzeichnet, dass** der Hubzylinder (9a) karosseriefest und die Kolbenstange (9b) demgegenüber ausfahrbar ausgebildet ist.

6. Kraftfahrzeug nach Anspruch 4 oder 5, **dadurch gekennzeichnet, dass** die Kolbenstange (9b) unter Zwischenschaltung eines Lagers (13) den Aufnahmeboden (8) durchgreift.

7. Kraftfahrzeug nach einem der Ansprüche 4 bis 6, **dadurch gekennzeichnet, dass** die Kolbenstange (9b) mithilfe einer Verriegelungseinheit (15) lösbar mit dem Aufnahmeboden (8) verriegelt ist.

8. Kraftfahrzeug nach Anspruch 7, **dadurch gekennzeichnet, dass** die Verriegelungseinheit (15) in oder an dem Lager (13) angeordnet ist.

9. Kraftfahrzeug nach Anspruch 7 oder 8, **dadurch gekennzeichnet, dass** die Verriegelungseinheit (15) als die Kolbenstange (9b) durchgreifender sowie beispielhaft hydraulisch betätigbarer Bolzen ausgebildet ist.

10. Kraftfahrzeug nach Anspruch 9, **dadurch gekennzeichnet, dass** die Kolbenstange (9b) in ihrer Längserstreckung mit zumindest einer Durchgriffsöffnung für den Bolzen ausgerüstet ist.

11. Kraftfahrzeug nach einem der Ansprüche 1 bis 10, **dadurch gekennzeichnet, dass** die Hebevorrichtung (9) wenigstens einen Sensor (16) aufweist.

12. Kraftfahrzeug nach Anspruch 11, **dadurch gekennzeichnet, dass** der Sensor (16) als Abstandssensor (16) ausgebildet ist, um einen Abstand des Aufnahmebodens (8) von der Hebevorrichtung (9) und damit einer Dachfläche (17) der Transportaufnahme (7) zu erfassen.

13. Kraftfahrzeug nach einem der Ansprüche 1 bis 12, **dadurch gekennzeichnet, dass** ein weiterer Sensor (18) in der Transportaufnahme (7) vorgesehen ist, mit dessen Hilfe Abmessungen des Objektes (20) erfasst werden.

14. Kraftfahrzeug nach einem der Ansprüche 11 bis 13, **dadurch gekennzeichnet, dass** eine die beiden Sensoren (16, 18) auswertende Steuereinheit (19) vorgesehen ist, welche in Abhängigkeit von mit den Sensoren (16, 18) ermittelten Werten die Hebevorrichtung (9) ansteuert.

## Claims

1. Motor vehicle, in particular motorhome (1), having a chassis (3) supporting a body with at least two axles (4, 4'), and having a transport receptable (7) arranged in the body with a receiving floor (8), wherein the receiving floor (8) is designed to be retractable and extendable relative to the body for the purpose of loading and unloading with an object (20), for example a passenger car (20), and wherein the receiving floor (8) loaded with the object (20) is lifted by means of a lifting device (9) within the transport receptable (7) after retraction,
**characterized in that**
the lifting device (9) reaches through the receiving floor, wherein
the lifting device (9) is releasably locked to the receiving floor (8) and as a result the receiving floor (8) is mounted in a floating manner relative to the lifting device (9) such that
a relative movement is permitted between the receiving floor (8) and the lifting device (9).

2. Motor vehicle according to Claim 1, **characterized in that** the lifting device (9) is supported on the base (21) on one side and on a frame (6) on the other side.

3. Motor vehicle according to Claim 2, **characterized in that** the frame (6) is supported on the chassis (3) and carries a vehicle cabin (5).

4. Motor vehicle according to one of Claims 1 to 3, **characterized in that** the lifting device (9) is designed as a piston/cylinder arrangement (9a, 9b) with a lifting cylinder (9a) and piston rod (9b) that can be moved with respect thereto.

5. Motor vehicle according to Claim 4, **characterized in that** the lifting cylinder (9a) is fixed to the body and the piston rod (9b) is extendable relative thereto.

6. Motor vehicle according to Claim 4 or 5, **characterized in that** the piston rod (9b) engages through the receiving floor (8) with the interposition of a bearing (13).

7. Motor vehicle according to one of Claims 4 to 6, **characterized in that** the piston rod (9b) is releasably locked to the receiving floor (8) by means of a locking unit (15).

8. Motor vehicle according to Claim 7, **characterized in that** the locking unit (15) is arranged in or on the bearing (13).

9. Motor vehicle according to Claim 7 or 8, **characterized in that** the locking unit (15) is designed as a bolt that engages through the piston rod (9b) and can be hydraulically actuated, for example.

10. Motor vehicle according to Claim 9, **characterized in that** the piston rod (9b) is equipped with at least one reach-through opening for the bolt in its longitudinal extension.

11. Motor vehicle according to one of Claims 1 to 10, **characterized in that** the lifting device (9) has at least one sensor (16).

12. Motor vehicle according to Claim 11, **characterized in that** the sensor (16) is designed as a distance sensor (16) in order to detect a distance of the receiving floor (8) from the lifting device (9) and thus a roof area (17) of the transport receptacle (7).

13. Motor vehicle according to one of Claims 1 to 12, **characterized in that** a further sensor (18) is provided in the transport receptacle (7), with the help of which dimensions of the object (20) are detected.

14. Motor vehicle according to one of Claims 11 to 13, **characterized in that** a control unit (19) evaluating the two sensors (16, 18) is provided and controls the lifting device (9) as a function of values determined with the sensors (16, 18).

## Revendications

1. Véhicule, en particulier autocaravane (1), avec un châssis (3) supportant une carrosserie avec au moins deux essieux (4, 4') et avec un compartiment de transport (7) disposé dans la carrosserie avec fond de compartiment (8), sachant que le fond de compartiment (8) est constitué pouvant être rentré et sorti par rapport à la carrosserie dans le but de charger et décharger un objet (20), par exemple un véhicule de tourisme (20), et sachant que le fond de compartiment (8) chargé de l'objet (20) est relevé après l'introduction à l'aide d'un dispositif de levage (9) à l'intérieur du compartiment de transport (7),
**caractérisé en ce que**
le dispositif de levage (9) traverse le fond de logement, sachant que
le dispositif de levage (9) est verrouillé de façon amovible avec le fond de compartiment (8) et le fond de compartiment (8) est ainsi logé de façon flottante par rapport au dispositif de levage (9) de telle manière
qu'un mouvement relatif est admis entre le fond de compartiment (8) et le dispositif de levage (9).

2. Véhicule selon la revendication 1, **caractérisé en ce que** le dispositif de levage (9) s'appuie d'une part sur le sol (21) et d'autre part sur un cadre (6).

3. Véhicule selon la revendication 2, **caractérisé en ce que** le cadre (6) s'appuie sur le châssis (3) et porte un habitacle de véhicule (5).

4. Véhicule selon l'une quelconque des revendications 1 à 3, **caractérisé en ce que** le dispositif de levage (9) est constitué comme un système à piston/cylindre (9a, 9b) avec vérin de levage (9a) et une tige de piston (9b) pouvant être par contre déplacée.

5. Véhicule selon la revendication 4, **caractérisé en ce que** le vérin de levage (9a) est constitué fixe à la carrosserie et la tige de piston (9b) pouvant être par contre sortie.

6. Véhicule selon la revendication 4 ou 5, **caractérisé en ce que** la tige de piston (9b) traverse le fond de compartiment (8) par l'intermédiaire d'un support (13).

7. Véhicule selon l'une quelconque des revendications 4 à 6, **caractérisé en ce que** la tige de piston (9b) est verrouillée de façon amovible avec le fond de compartiment (8) à l'aide d'une unité de verrouillage (15) .

8. Véhicule selon la revendication 7, **caractérisé en ce que** l'unité de verrouillage (15) est disposée dans ou sur le support (13).

9. Véhicule selon la revendication 7 ou 8, **caractérisé en ce que** l'unité de verrouillage (15) est constituée sous la forme d'un axe traversant la tige de piston (9b) et pouvant être par exemple actionné de façon hydraulique.

10. Véhicule selon la revendication 9, **caractérisé en ce que** la tige de piston (9b) est équipée dans son extension longitudinale d'au moins une ouverture de passage pour l'axe.

11. Véhicule selon l'une quelconque des revendications 1 à 10, **caractérisé en ce que** le dispositif de levage (9) comporte au moins un capteur (16).

12. Véhicule selon la revendication 11, **caractérisé en ce que** le capteur (16) est constitué comme un capteur de distance (16) pour saisir une distance du fond de compartiment (8) depuis le dispositif de levage (9) et de ce fait d'une surface de toit (17) du compartiment de transport (7).

13. Véhicule selon l'une quelconque des revendications 1 à 12, **caractérisé en ce qu'**un autre capteur (18) est prévu dans le compartiment de transport (7) à l'aide duquel les dimensions de l'objet (20) sont saisies.

14. Véhicule selon l'une quelconque des revendications 11 à 13, **caractérisé en ce qu'**une unité de commande (19) exploitant les deux capteurs (16, 18) est prévue, laquelle actionne le dispositif de levage (9) en fonction des valeurs déterminées avec les capteurs (16, 18) .
